# EUROPEAN PATENT SPECIFICATION

(11) **EP 2 060 597 B1**
(45) Date of publication and mention of the grant of the patent: **11.04.2012**
(21) Application number: 08019709.8
(22) Date of filing: 11.11.2008
(51) Int. Cl.: C08J 5/12

(54) **Method for bonding polyamide resin and fluoroelastomer**
Verfahren zum Binden von Polyamid-Harz und Fluorelastomer
Procédé pour lier de la résine polyamide et un fluoro-élastomère

(30) Priority: 15.11.2007 JP 2007296578
(43) Date of publication of application: 20.05.2009
(73) Proprietor: Shin-Etsu Chemical Co., Ltd., Tokyo (JP)
(72) Inventor: Shiono, Mikio c/o Silicone-Electronics Materials Research Center, Annaka-shi Gumma-ken (JP); Fukuda, Kenichi c/o Silicone-Electronics Materials Research Center, Annaka-shi Gumma-ken (JP); Sato, Shinichi c/o Silicone-Electronics Materials Research Center, Annaka-shi Gumma-ken (JP)
(74) Representative: TER MEER - STEINMEISTER & PARTNER GbR

(56) References cited:
- EP-A1- 1 081 185
- DATABASE WPI Week 198928 Thomson Scientific, London, GB; AN 1989-202729 XP002604490 & JP 1 141027 A (NIPPON OIL SEAL IND CO LTD) 2 June 1989 (1989-06-02)

## Description

### FIELD OF THE INVENTION

This invention relates to a method for providing a bond between a polyamide resin and a fluoroelastomer, which bond is maintained over a long term even in oils, especially transmission oils.

### BACKGROUND ART

Liquid fluoroelastomer compositions which cure by an addition reaction between alkenyl groups and hydrosilyl groups are known in the art. To these compositions are added an organopolysiloxane bearing hydrosilyl groups and epoxy and/or trialkoxysilyl groups, and carboxylic anhydride. The resulting compositions have improved adhesion to polyphenylene sulfide resins and polyamide resins as disclosed in JP-A 2001-72868 and JP-A 2002-105319.

These fluoroelastomer compositions can be cured by brief heating. The cured products have excellent heat resistance, low-temperature properties, gasoline resistance, solvent resistance, oil resistance, chemical resistance, and electrical characteristics as well as low moisture permeability. Such compositions are used in bonding applications within a variety of industrial fields where these properties are required, especially for protective sealing of electrical components in the automotive industry.

However, a problem arises when the fluoroelastomer compositions are applied directly to glass-filled polyamide resins, of which containment casings for various electronic control circuits used in the automotive application are typically made, even after suitable pre-treatment such as UV treatment or plasma treatment is effected. Often bubbles are left at the bond interface after curing, resulting in insufficient adhesion.

One solution to bubbles is by heat treatment of the compositions at 100 to 200°C immediately before their application. While the heat treatment is effective in eliminating bubbles at the bond interface, the bond does not last long upon immersion in oils such as engine oil, gear oil, and transmission oil partly because the fluoroelastomer compositions themselves have insufficient adhesion to polyamide resins.

In the sealant application where the sealant can come in contact with oils, typically transmission oils at high temperatures, there exists a desire for a bonding method which maintains a durable bond during long-term immersion in oils.

### DISCLOSURE OF THE INVENTION

An object of the invention is to provide a method for providing a bond between a polyamide resin and a fluoroelastomer which bond is maintained over a long term in oils, typically transmission oils.

The inventors have found that a bond between fluoroelastomer and polyamide resin is established by applying a silane-based primer composition to a surface of a polyamide resin, heat treating at 100-200°C, applying a liquid fluoroelastomer composition to the primer coat at room temperature to 100°C, and heat curing at 100-200°C for bonding the fluoroelastomer to the polyamide resin. The bond is maintained over a long period of time even in oils, typically transmission oils.

According to the invention, there is provided a method for providing a bond between a polyamide resin and a fluoroelastomer, comprising the steps of applying a silane-based primer composition to a surface of a polyamide resin, heat treating the primer composition at 100°C to 200°C to form a primer coat, applying a liquid fluoroelastomer composition to the primer coat at room temperature to 100°C, and heat curing the fluoroelastomer composition at 100°C to 200°C for bonding the fluoroelastomer to the polyamide resin.

In a preferred embodiment, the silane-based primer composition comprises
(I) an aliphatic saturated hydrocarbon,
(II) a tetraalkoxysilane of the general formula (1):

   Si(OR¹)₄ (1)

   wherein R¹ is each independently a monovalent hydrocarbon group,
(III) a trialkoxysilane of the general formula (2):

   (R²O)₃-Si-CHR³-COOR⁴ (2)

   wherein R² is each independently a monovalent hydrocarbon group, R³ is hydrogen or methyl, and R⁴ is a monovalent hydrocarbon group, and
(IV) an alkyl titanate.

In another preferred embodiment, the liquid fluoroelastomer composition comprises
(A) a linear polyfluoro compound having the general formula (3):

   CH₂=CH- (X)ₐ-Rf¹ (X')ₐ -CH=CH₂ (3)

   wherein X is -CH₂-, -CH₂O-, -CH₂OCH₂- or -Y-NR-CO- wherein Y is -CH₂- or an o, m or p-dimethylsilylphenylene group of the structural formula (Z): 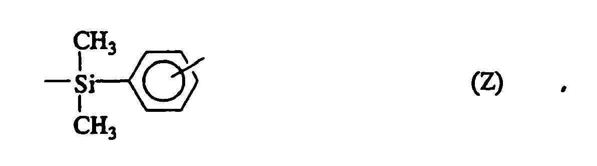 R is hydrogen or a substituted or unsubstituted monovalent hydrocarbon group, X' is -CH₂-, -OCH₂-, -CH,OCH_{.}- or -CO-NR-Y'- wherein Y' is -CH₂- or an o, m or p-dimethylsilylphenylene group of the structural formula (Z'): 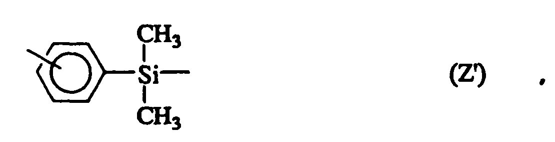 R is as defined above, "a" is independently 0 or 1,
   Rf¹ is a divalent perfluoropolyether group having the general formula (i):

   -CₜF₂ₜ -[OCF₂CF(CF₃)]ₚ-O-CF₂(CF₂)ₓCF₂-O-[CF(CF₂)CF₂O]_{q}-CₜF₂ₜ- (i)

   wherein p and q are integers of 1 to 150, the sum of p and q is 2 to 200 on average, r is an integer of 0 to 6, and t is 1, 2 or 3, or a divalent perfluoropolyether group of the general formula (ii):

   -CₜF₂ₜ -[OCF₂CF(CF₃)]ᵤ -(OCF₂)ᵥ -OCₜF₂ₜ- (ii)

   wherein u is an integer of 1 to 200, v is an integer of 1 to 50, and t is as defined above,
(B) a fluorinated organohydrogensiloxane containing per molecule at least one monovalent perfluoroalkyl, monovalent perfluorooxyalkyl, divalent perfluoroalkylene or divalent perfluorooxyalkylene group and at least two silicon-bonded hydrogen atoms,
(C) a platinum group metal catalyst,
(D) hydrophobic silica powder,
(E) an organosiloxane containing per molecule at least one hydrogen atom bonded to a silicon atom directly, at least one group selected from among epoxy and trialkoxysilyl groups, which is bonded to a silicon atom via a carbon atom or carbon and oxygen atoms, and optionally at least one monovalent perfluoroalkyl or monovalent perfluorooxyalkyl group bonded to a silicon atom via a carbon atom or carbon and oxygen atoms, and
(F) a carboxylic anhydride.

### BENEFITS OF THE INVENTION

According to the bonding method of the invention, a bond is established between fluoroelastomer and polyamide resin and maintained over a long period of time even in oils, typically transmission oils.

### DESCRIPTION OF THE PREFERRED EMBODIMENT

In the specification, the singular forms "a," "an" and "the" include plural referents unless the context clearly dictates otherwise.

In the formulas, "Me" stands for methyl, "Ph" for phenyl, and "pbw" for parts by weight.

### [Silane-based primer composition]

### Component I

Component (I) is an aliphatic saturated hydrocarbon and used as a diluent solvent for uniformly dissolving components (II) to (IV) to be described later and enabling to form a homogeneous primer coat after drying. The hydrocarbon may have a linear, branched or cyclic structure and preferably have a boiling point in the range between 30°C and 200°C under atmospheric pressure.

Examples of hydrocarbon (I) include, but are not limited to, pentane, hexane, cyclohexane, heptane, octane, isooctane, nonane, decane and undecane. These hydrocarbons may be used alone or in admixture of two or more.

In the primer composition, the hydrocarbon (I) may be compounded in an amount that may be determined as appropriate depending on ease of application to the substrate and the thickness of dry coat, specifically in an amount of 70 to 90% by weight, and preferably 75 to 90% by weight. With less than 70 wt% of the hydrocarbon, cracks may occur in the primer coat upon drying. More than 90 wt% of the hydrocarbon may allow for delamination at the primer coat/polyamide resin interface.

### Component II

Component (II) is a tetraalkoxysilane of the general formula (1):

Si(OR¹)₄ (1)

wherein R¹ is each independently a monovalent hydrocarbon group. It is a main component in forming a siliceous coat after drying and also serves as an adhesive component to the underlying substrate.

In formula (1), R¹ is each independently selected from monovalent hydrocarbon groups of 1 to 8 carbon atoms, preferably free of aliphatic unsaturation, for example, alkyl groups such as methyl, ethyl, propyl, isopropyl, butyl, isobutyl, tert-butyl, pentyl, hexyl and octyl, cycloalkyl groups such as cyclopentyl, cyclohexyl and cycloheptyl, aryl groups such as phenyl, tolyl and xylyl, and aralkyl groups such as benzyl and phenylethyl. Inter alia, methyl, ethyl, propyl, isopropyl, butyl, isobutyl and tert-butyl are preferred.

Examples of tetraalkoxysilane (II) include, but are not limited to, those of the following structural formulae. These compounds may be used alone or in admixture of two or more.

(CH₃O)₄Si

(C₂H₅O)₄Si

(C₂H₅O)₃SiOCH₃

(n-C₃H_{7O})₄Si

(n-C₃H₇O)₃SiOCH₃

(n-C₃H₇O)₃SiOC₂H₅

(i-C₃H₇O)₄Si

(i-C₃H₇O)₃SiOCH₃

(i-C₃H₇O)₃SiOC₂H₅

(n-C₄H₉O)₃SiOCH₃

(n-C₄H₉O)₃SiOC₂H₅

(i-C₄H₉O)₃SiOCH₃

(i-C₄H₉O)₃SiOC₂H₅

(t-C₄H₉O)₃SiOCH₃

(t-C₄H₉O)₃SiOC₂H₅

In the primer composition, the tetraalkoxysilane (II) may be compounded in an amount of 5 to 15% by weight, and preferably 5 to 10% by weight. With less than 5 wt% of the tetraalkoxysilane, the primer coating may become powdered simultaneously when coated. More than 15 wt% of the tetraalkoxysilane may allow for delamination at the primer coat/polyamide resin interface.

### Component III

Component (III) is a trialkoxysilane of the general formula (2):

(R²O)₃-Si-CHR³-COOR⁴ (2)

wherein R² is each independently a monovalent hydrocarbon group, R³ is hydrogen or methyl, and R⁴ is a monovalent hydrocarbon group. It serves as a stabilizer for the primer composition during shelf storage and also as a film-forming component and further as an adhesive component to the underlying substrate.

In formula (2), R² is each independently selected from monovalent hydrocarbon groups of 1 to 8 carbon atoms, preferably free of aliphatic unsaturation, for example, alkyl groups such as methyl, ethyl, propyl, isopropyl, butyl, isobutyl, tert-butyl, pentyl, hexyl and octyl, cycloalkyl groups such as cyclopentyl, cyclohexyl and cycloheptyl, aryl groups such as phenyl, tolyl and xylyl, and aralkyl groups such as benzyl and phenylethyl. Inter alia, methyl, ethyl, propyl, isopropyl, butyl, isobutyl and tert-butyl are preferred.

In -CHR³-COOR⁴ moiety of formula (2), R³ is hydrogen or methyl. R⁴ is a monovalent hydrocarbon group of 1 to 8 carbon atoms, preferably free of aliphatic unsaturation, as illustrated above for R¹. Examples include alkyl groups such as methyl, ethyl, propyl, isopropyl, butyl, isobutyl, tert-butyl, pentyl, hexyl and octyl, cycloalkyl groups such as cyclopentyl, cyclohexyl and cycloheptyl, aryl groups such as phenyl, tolyl and xylyl, and aralkyl groups such as benzyl and phenylethyl. Preferred are alkyl groups such as methyl, ethyl, propyl, isopropyl, butyl, isobutyl, tert-butyl, pentyl, hexyl and octyl.

The trialkoxysilane of formula (2) may be prepared by well-known techniques. A choice of a particular technique depends on R³ in formula (2).

A trialkoxysilane of formula (2) wherein R³ is hydrogen may be prepared by reacting a tetraalkoxysilane of the general formula (4):

(R²O)₄-Si (4)

wherein R² is as defined above with a bromoacetate of the general formula (5):

BrCH₂ - COOR⁴ (5)

wherein R⁴ is as defined above, in the presence of zinc powder.

Another trialkoxysilane of formula (2) wherein R³ is methyl may be prepared by reacting an organic silicon hydride of the general formula (6):

(R²O)₃-Si-H (6)

wherein R² is as defined above with an acrylate of the general formula (7):

CH₂=CH-COOR⁴ (7)

wherein R⁴ is as defined above, in the presence of a platinum catalyst.

In the course of preparing the trialkoxysilane, the desired compound is preferably isolated and purified at the end of reaction such as by distillation.

Examples of the trialkoxysilane as component (III) include, but are not limited to, those of the following structural formulae. These compounds may be used alone or in admixture of two or more.

(CH₃O)₃SiCH₂COOCH₃

(CH₃O)₃SiCH₂COOC₂H₅

(CH₃O)₃SiCH₂COOC₃H₇-n

(CH₃O)₃SiCH₂COOC₃H₇-i

(CH₃O)₃SiCH₂COOC₄H₉-n

(CH₃O)₃SiCH₂COOC₄H₉-i

(CH₃O)₃SiCH₂COOC₄H₉-t

(CH₃O)₃SiCH₂COOC₈H₁₇-n

(C₂H₅O)₃SiCH₂COOCH₃

(C₂H₅O)₃SiCH₂COOC₂H₅

(C₂H₅O)₃SiCH₂COOC₃H₇-n

(C₂H₅O)₃SiCH₂COOC₃H₇-i

(CH₃O)₃SiCH₂COOC₄H₉-n

(C₂H₅O)₃SiCH₂COOC₄H₉-i

(C₂H₅O)₃SiCH₂COOC₄H₉-t

(CH₃O)₃SiCH(CH₃)COOCH₃

(CH₃O)₃SiCH(CH₃)COOC₂H₅

(CH₃O)₂SiCH(CH₃)COOC₃H₇-n

(CH₃O)₃SiCH(CH₃)COOC₃H₇-i

(CH₃O)₃SiCH(CH₃)COOC₄H₉-n

(CH₃O)₃SiCH(CH₃)COOC₄H₉-i

(CH₃O)₃SiCHCH₃)COOC₄H₉-t

(CH₃O)₃SiCH(CH₃)COOC₈H₁₇-n

(C₂H₅O)₃SiCH(CH₃)COOCH₃

(C₂H₅O)₃SiCH(CH₃)COOC₂H₅

(C₂H₅O)₃SiCH(CH₃)COOC₃H₇-n

(C₂H₅O)₃SiCH(CH₃)COOC₃H₇-i

(C₂H₅O)₃SiCH(CH₃)COOC₄H₉-n

(C₂H₅O)₃SiCH(CH₃)COOC₄H₉-i

(C₂H₅O)₃SiCH(CH₃)COOC₄H₉-t

In the primer composition, the trialkoxysilane (III) may be compounded in an amount of 1 to 6% by weight, and preferably 1 to 4% by weight. With less than 1 wt% of the trialkoxysilane, the primer coat may whiten at the surface when coated. More than 6 wt% of the trialkoxysilane may allow for delamination at the primer coat/polyamide resin interface.

### Component IV

Component (IV) is an alkyl titanate. It is a catalyst for promoting condensation reaction between components (II) and (III) in air, and also serves as a film-forming component and further as an adhesive component.

Examples of the alkyl titanate include, but are not limited to, tetra(n-propyl) titanate, tetra(i-propyl) titanate, tetra(n-butyl) titanate, tetra(i-butyl) titanate, tetra(s-butyl) titanate, and tetra(t-butyl) titanate. Inter alia, tetra(i-propyl) titanate and tetra(n-butyl) titanate are preferred.

In the primer composition, component (IV) may be compounded in an amount of 1 to 9% by weight, and preferably 3 to 6% by weight. Less than 1 wt% of alkyl titanate may allow for delamination at the primer coat/polyamide resin interface. With more than 9 wt%, the primer coating may become powdered simultaneously when coated.

In addition to the foregoing components (II) to (IV), the primer composition may further comprise any of well-known silane coupling agents and coloring agents insofar as the objects of the invention are not impaired. Suitable silane coupling agents include alkoxysilanes having an epoxy, vinyl or amino group as the carbon functional group.

The primer composition may be readily prepared by drying the aliphatic saturated hydrocarbon solvent as component (I), adding components (II) to (IV) to the dry solvent, followed by agitation and mixing.

### [Liquid fluoroelastomer composition]

### Component A

Component (A) is a linear polyfluoro compound containing at least two alkenyl groups per molecule. The preferred linear polyfluoro compound has the general formula (3).

CH₂=CH-(X)ₐ-Rf¹-(X')ₐ-CH=CH₂ (3)

Herein, X is -CH₂-, -CH₂O-, -CH₂OCH₂- or -Y-NR-CO-, wherein Y is -CH₂- or an o-, m- or p-dimethylsilylphenylene group of structural formula (Z): 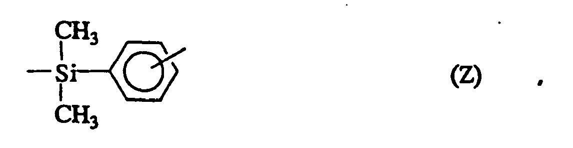 and R is hydrogen or a substituted or unsubstituted monovalent hydrocarbon group. X' is -CH₂-, -OCH₂-, -CH₂OCH₂- or -CO-NR-Y'-, wherein Y' is -CH₂- or an o-, m- or p-dimethylsilylphenylene group of structural formula (Z'): 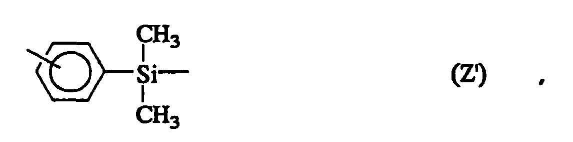 and R is as defined above. Rf¹ is a divalent perfluoropolyether group. The subscript "a" is each independently 0 or 1.

R is a hydrogen atom or a substituted or unsubstituted monovalent hydrocarbon group having preferably 1 to 12 carbon atoms, and more preferably 1 to 10 carbon atoms. Specific examples of hydrocarbon groups include alkyl groups such as methyl, ethyl, propyl, butyl, hexyl, cyclohexyl and octyl; aryl groups such as phenyl and tolyl; aralkyl groups such as benzyl and phenylethyl; and substituted monovalent hydrocarbon groups in which some or all hydrogen atoms are substituted by halogen atoms such as fluorine.

Preferably, Rf1 in formula (3) is a divalent perfluoropolyether structure having the general formula (i) or (ii).

-CₜF₂ₜ -[OCF₂CF(CF₃)]ₚ-O-CF₂(CF₂)ᵣCF₂-O-[CF(CF₃)CF₂O]_{q}-CₜF₂ₜ- (i)

In formula (i), p and q are integers of 1 to 150, an average sum of p and q is 2 to 200, r is an integer of 0 to 6, and t is 1, 2 or 3.

-CₜF₂ₜ -[OCF₂CF(CF₃)]ₙ-(OCF₂)ᵥ-OCₜF₂ₜ- (ii)

In formula (ii), u is an integer of 1 to 200, v is an integer of 1 to 50, and t is as defined above.

Preferred examples of Rf1 group include those of the following three formulas: 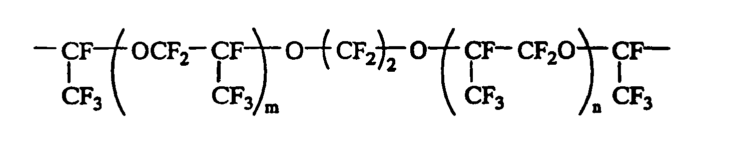 wherein m and n are each an integer of at least 1, and an average sum of m+n is from 2 to 200; 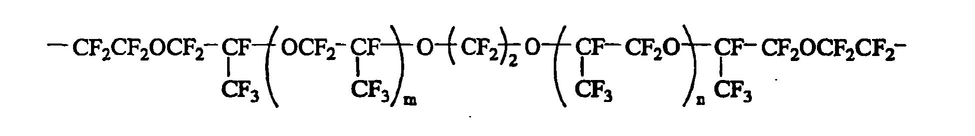 wherein m and n are each an integer of at least 1, and an average sum of m+n is from 2 to 200; and 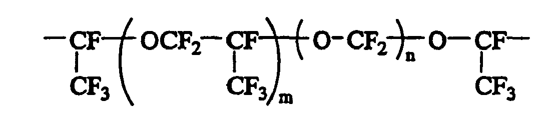 wherein m is an integer of 1 to 200, and n is an integer of 1 to 50. Of these, the divalent groups with the structure of the first formula are most preferred.

Preferred examples of component (A) include compounds of the general formula (8). 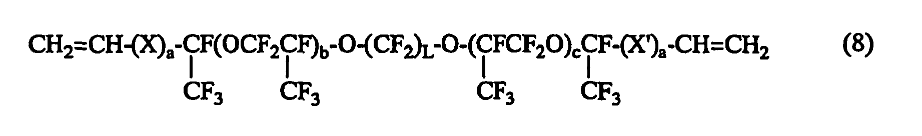 Herein X is -CH₂-, -CH₂O-, -CH₂OCH₂- or -Y-NR-CO-, wherein Y is -CH₂- or an o-, m- or p-dimethylsilylphenylene group of structural formula (Z): 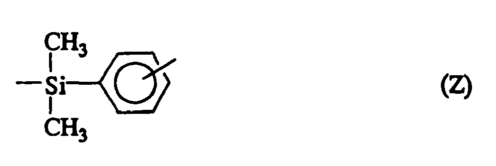 and R is hydrogen, methyl, phenyl or allyl. X' is -CH₂-, -OCH₂-, -CH₂OCH₂- or CO-NR-Y'-, wherein Y' is -CH₂- or an o-, m- or p-dimethylsilylphenylene group of structural formula (Z'): 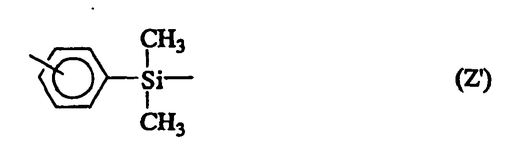 and R is as defined above. The subscript "a" is independently 0 or 1, L is an integer from 2 to 6, and b and c are each an integer from 0 to 200.

Illustrative examples of linear polyfluoro compounds of formula (8) include compounds having the following formulas. 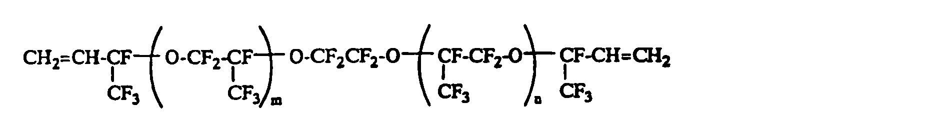 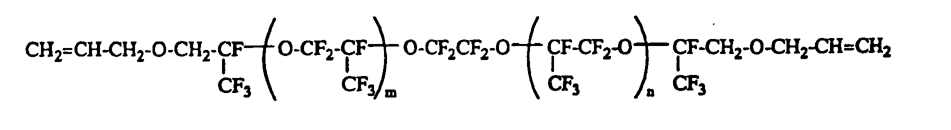 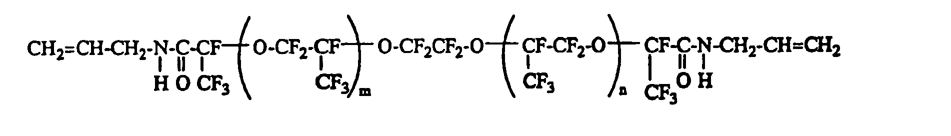 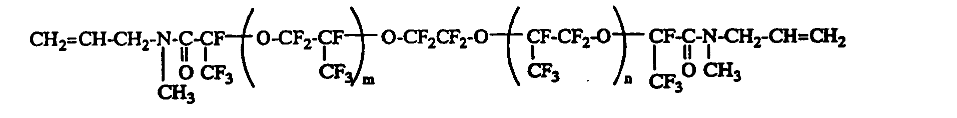 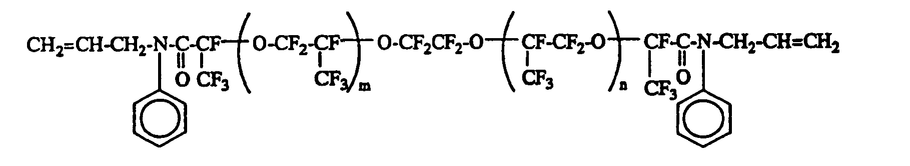 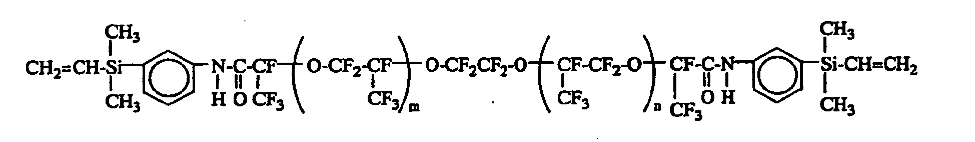 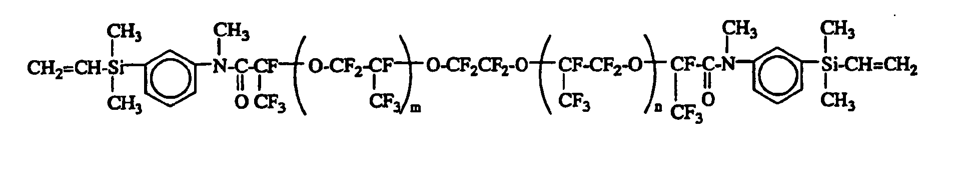 In the above formulas, m and n are each an integer from 0 to 200, and the sum of m+n is from 6 to 200.

For the fluoroelastomer composition to have suitable physical properties when used for such purposes as sealing, potting, coating and the like, and also in the cured state, it is desirable that the linear polyfluoro compound of formula (3) have a viscosity at 23°C in a range of 100 to 100,000 mPa-s, preferably 500 to 50,000 mPa-s, and even more preferably 1,000 to 20,000 mPa-s. An appropriate viscosity for a particular application can be selected from within this viscosity range.

These linear polyfluoro compounds may be used singly or as a combination of two or more thereof.

### Component B

Component (B) is a fluorinated organohydrogensiloxane having at least two silicon-bonded hydrogen atoms (sometimes referred to below as hydrosilyl groups, or Si-H groups) per molecule. It functions as a crosslinker or chain extender for component (A). For good compatibility with and dispersibility in component (A) and uniformity after curing, it is preferable for component (B) to have on the molecule at least one fluorine-bearing group selected from among monovalent perfluoroalkyl groups, monovalent perfluorooxyalkyl groups, divalent perfluoroalkylene groups and divalent perfluorooxyalkylene groups.

Illustrative examples of such fluorine-bearing groups include those of the following general formulas:

C_{g}F_{2g+1} -

(wherein g is an integer from 1 to 20, and preferably from 2 to 10),

-C_{g}F_{2g}-

(wherein g is an integer from 1 to 20, and preferably from 2 to 10),

F-[CF(CF₃)CF₂O]_{f}-CₕF₂ₕ-

(wherein f is an integer from 2 to 200, and preferably from 2 to 100, and h is an integer from 1 to 3),

-CF(CF₃)-[OCF₂CF(CF₃)]ᵢ-O-CF₂CF₂-O-[CF(CF₃)CF₂O]ⱼ-CF(CF₃)-

(wherein i and j are each an integer of at least 1, an average sum of i+j is from 2 to 200, and preferably from 2 to 100), and

-(CF₂O)ᵣ-CF₂CF₂O)-CF₂-

(wherein r and s are each an integer from 1 to 50).

Divalent linkages for connecting the above perfluoroalkyl, perfluorooxyalkyl, perfluoroalkylene or perfluorooxyalkylene groups with silicon atoms include alkylene and arylene groups and combinations thereof, which may be separated by an ether-bonding oxygen atom, amide linkage, carbonyl linkage, or combinations thereof. Specific examples include linkages having 2 to 12 carbon atoms, such as

-CH₂CH₂-,

-CH₂CH₂CH₂-,

-CH₂CH₂CH₂OCH₂-,

-CH₂CH₂CH₂-NH-CO-,

-CH₂CH₂CH₂-N(Ph)-CO-,

-CH₂CH₂CH₂-N(CH₃)-CO-, and

-CH₂CH₂CH₂-O-CO-.

Illustrative examples of component (B) having such fluorine-bearing groups include the following compounds. These compounds may be used singly or as combinations of two or more thereof.

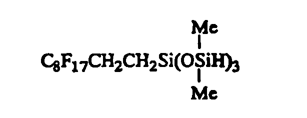

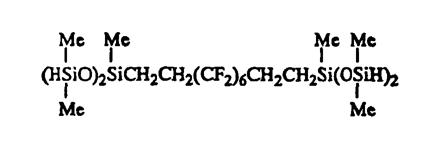

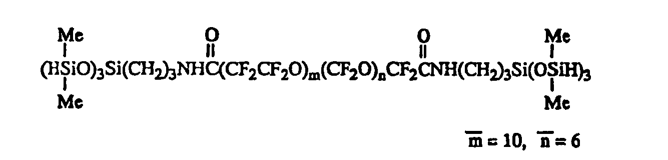

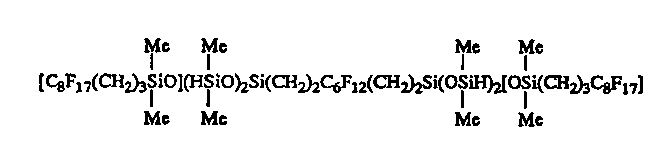

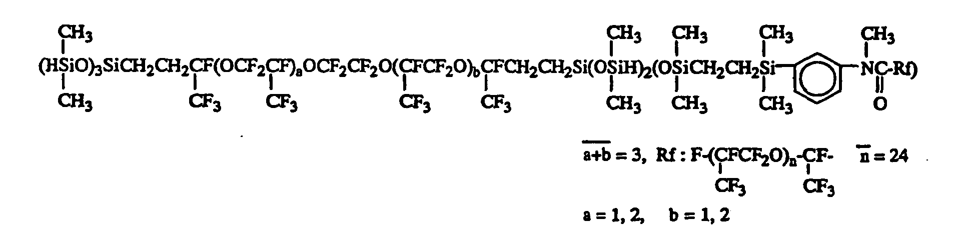

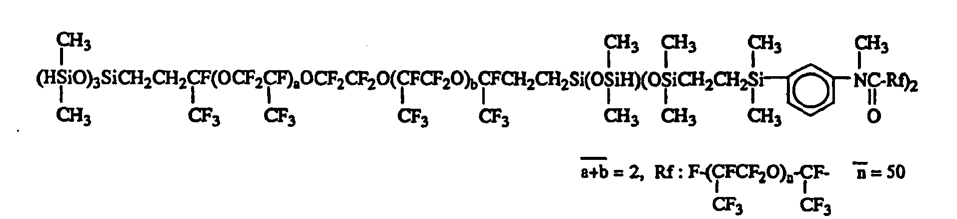

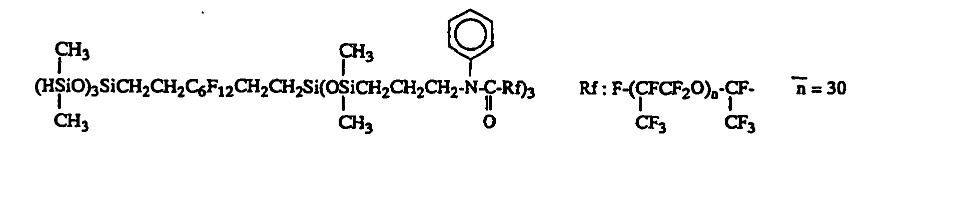

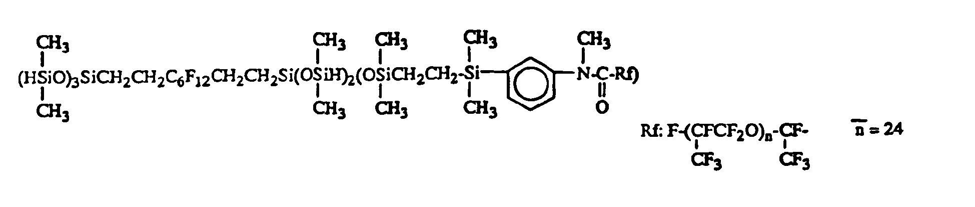

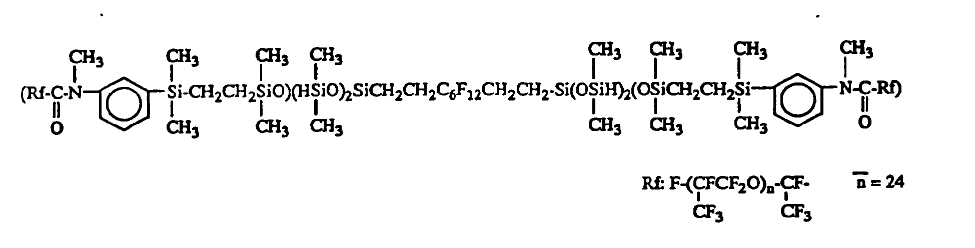

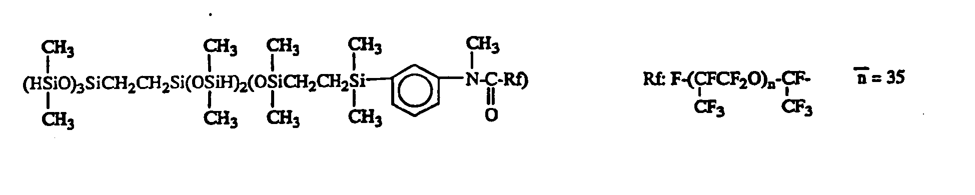

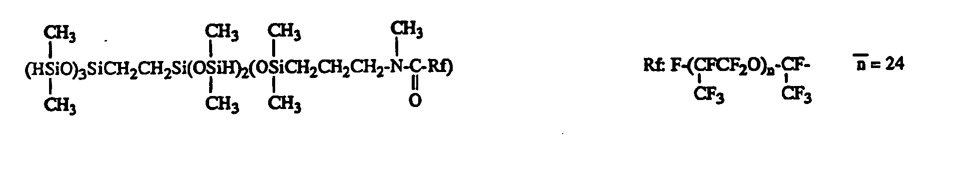

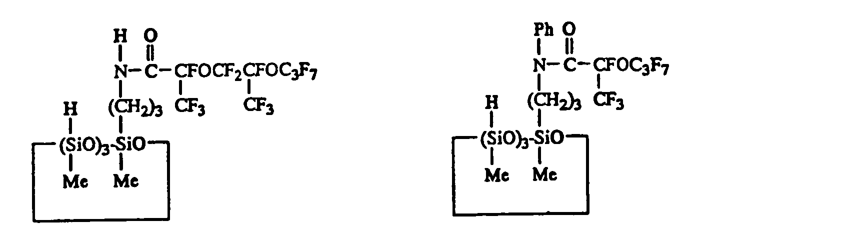

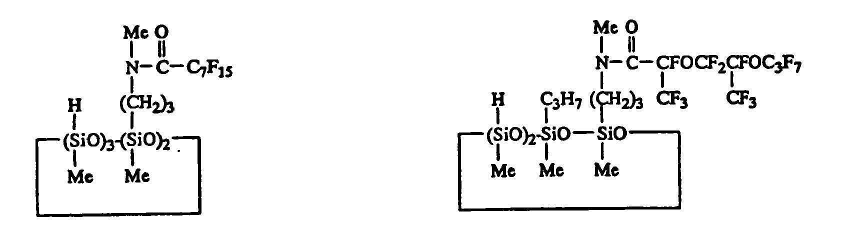

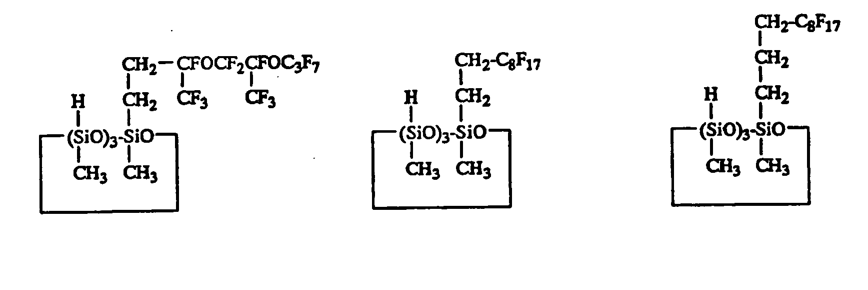

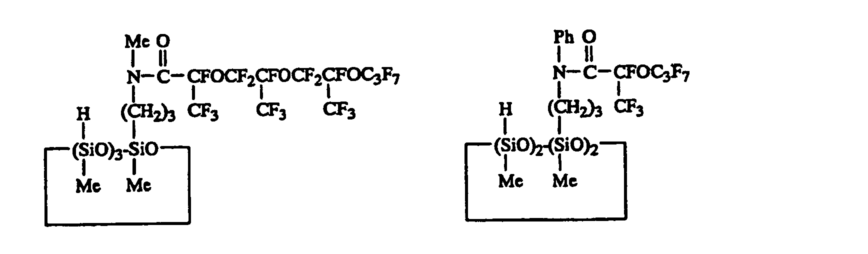

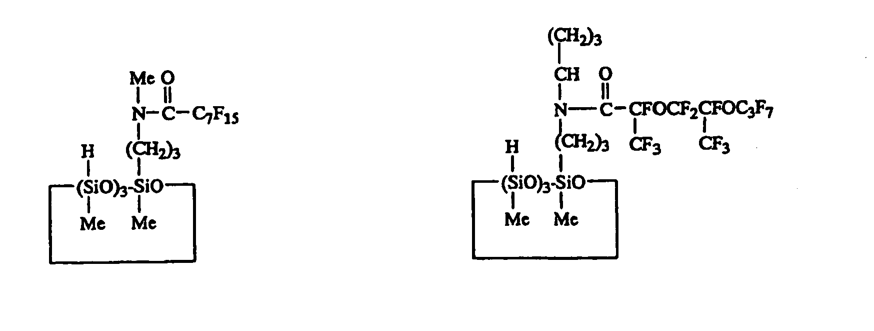

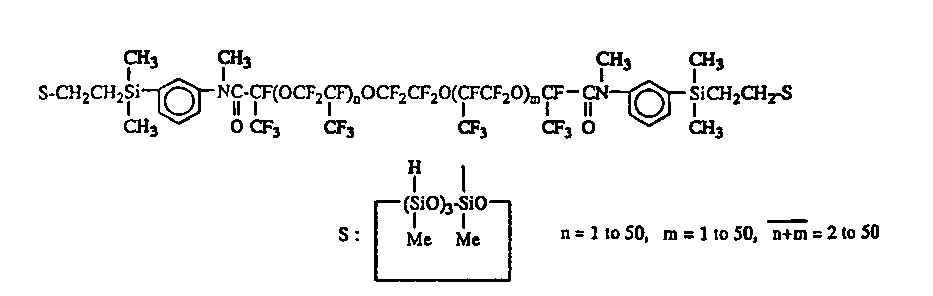

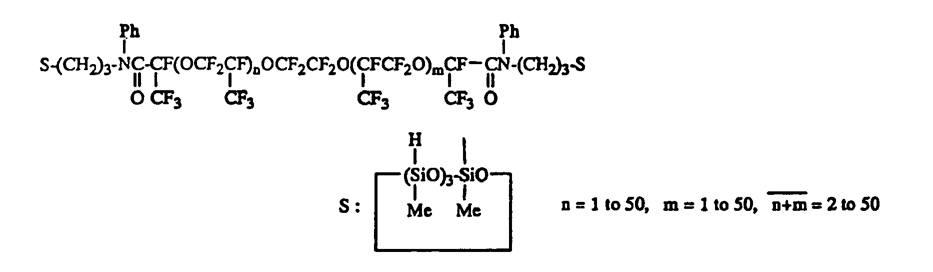

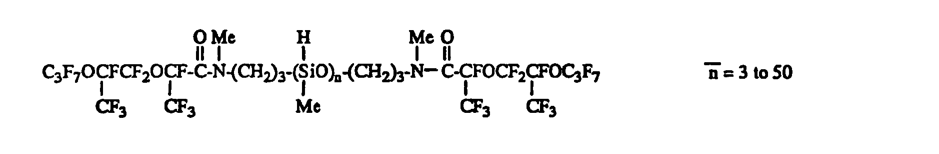

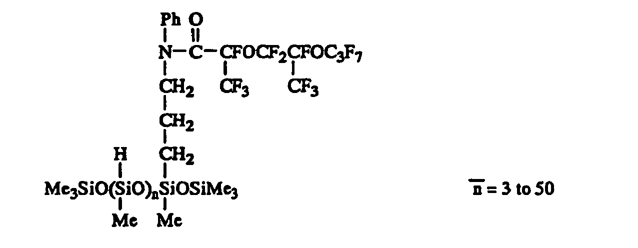

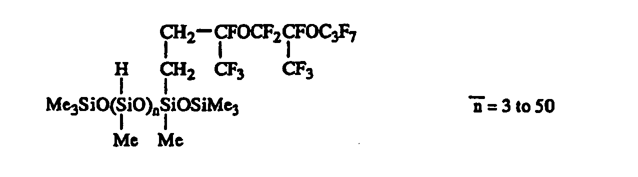

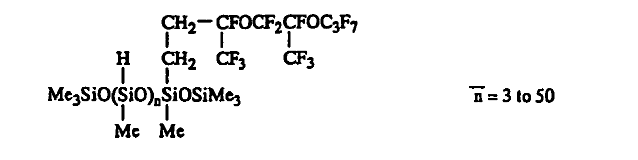

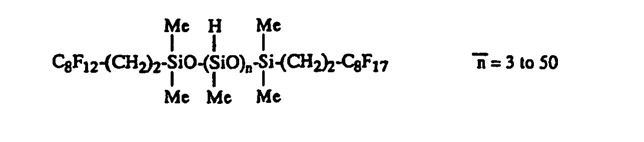

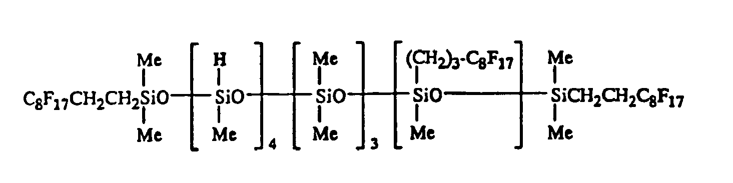

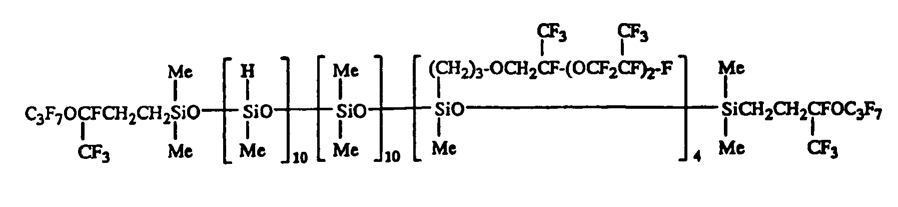

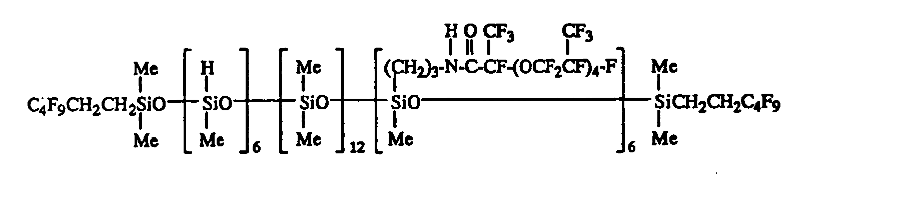

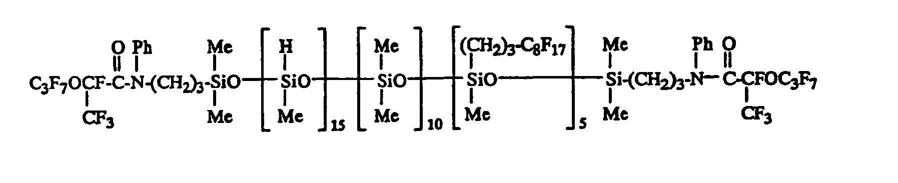

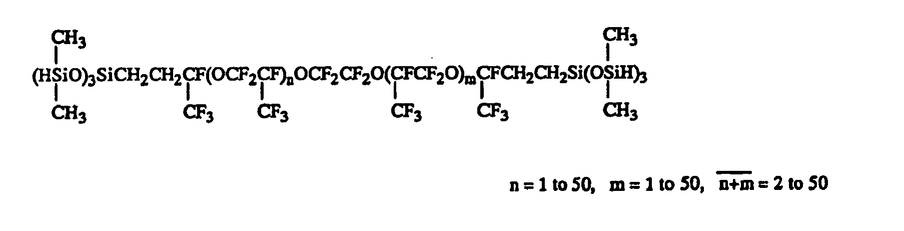

Component (B) is included in an amount effective for curing component (A), and specifically an amount corresponding to 0.5 to 3.0 moles, and preferably 0.8 to 2.0 moles, of hydrosilyl (Si-H) groups on component (B) per mole of total alkenyl groups (e.g., vinyl, allyl, cycloalkenyl groups) on component (A). If there are available less hydrosilyl groups, a degree of crosslinking may become insufficient, resulting in an under-cured product. On the other hand, too many hydrosilyl groups can induce foaming during the curing process.

### Component C

Component (C) is a platinum group metal catalyst, commonly known as hydrosilylation catalyst. It promotes addition reaction between alkenyl groups in component (A) and hydrosilyl groups in component (B). Such catalysts are generally noble metal compounds which are expensive. Of these, use is often made of platinum and platinum compounds which are more readily available.

Exemplary platinum compounds include chloroplatinic acid and complexes of chloroplatinic acid with olefins (e.g., ethylene), alcohols or vinyl siloxanes, and metallic platinum on supports such as silica, alumina and carbon. Known platinum group metal catalysts other than platinum compounds include rhodium, ruthenium, iridium and palladium compounds, specific examples of which are RhCl(PPh₃)₃, RhCl(CO)(PPh₃)₂, Ru₃(CO)₁₂, IrCl(CO)(PPh₃)₂, and Pd(PPh₃)₄.

If these catalysts are solid catalysts, they may be used in a solid state. However, for obtaining a uniform cured product, it is preferable to dissolve chloroplatinic acid or a complex thereof in a suitable solvent, and intimately mix the resulting solution with the linear polyfluoro compound (A).

Component (C) may be used in a catalytic amount, for example, in an amount of 0.1 to 500 ppm of platinum group metal based on the total weight of components (A) and (B).

### Component D

Component (D) is hydrophobic silica powder. It imparts appropriate physical strength to the cured composition and also helps disperse the organosiloxane (E) and carboxylic anhydride (F), to be described later, uniformly in the composition.

The hydrophobic silica powder (D) is obtainable through hydrophobic treatment of fine particulate silica having a BET specific surface area of at least 50 m²/g, especially 50 to 400 m²/g, as commonly used as the filler in silicone rubber. Silica with a surface area of less than 50 m²/g may impart insufficient physical strength to the cured composition and fail to facilitate uniform dispersion of components (E) and (F). Silica with a surface area of more than 400 m²/g may be difficult to uniformly disperse or effectively incorporate in the composition.

Examples of fine particulate silica include fumed silica, precipitated silica and colloidal silica, with the fumed silica being most preferred.

Suitable hydrophobizing agents for fine particulate silica include organochlorosilanes, organodisilazanes, cyclic organopolysilazanes, and linear organopolysiloxanes, with the organochlorosilanes being preferred.

Component (D) may preferably be compounded in an amount of 2.0 to 30 parts, and more preferably 4.0 to 25 parts by weight per 100 parts by weight of component (A). Less than 2.0 pbw of component (D) may allow the dispersion of component (E) in the composition to change with time, leading to unstable adhesion (or bond) and a lowering of cured physical properties. More than 30 pbw of component (D) may adversely affect the flow of the composition, sometimes compromising cured physical strength.

### Component E

Component (E) is an organosiloxane which is included to confer the fluoroelastomer composition with sufficient self-adhesiveness. In this sense, component (E) is also referred to as "tackifier." The organosiloxane bears on the molecule at least one silicon-bonded hydrogen atom and at least one group selected from among epoxy groups and trialkoxysilyl groups, which is bonded to a silicon atom through an intervening carbon atom or atoms or through intervening carbon and oxygen atoms. Preferred are those organosiloxanes which further have at least one monovalent perfluoroalkyl group or monovalent perfluorooxyalkyl group bonded to a silicon atom through an intervening carbon atom or atoms or through intervening carbon and oxygen atoms.

The organosiloxane (E) has a siloxane skeleton which may be either cyclic, linear or branched, or a combination of any of these. Organosiloxanes that can be used herein include those having the following average compositional formulas. 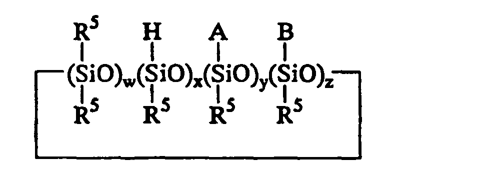 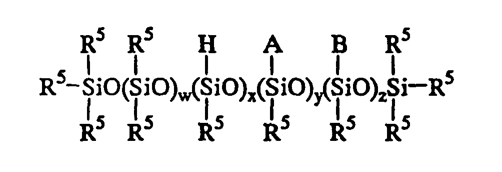 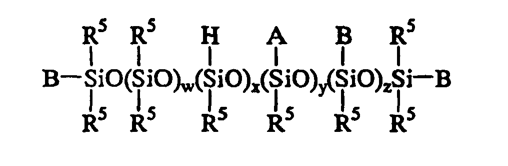 In these formulas, R⁵ is a halogen-substituted or unsubstituted monovalent hydrocarbon group, A and B are as described below, w is an integer from 0 to 100, x is an integer from 1 to 100, y is an integer from 1 to 100, and z is an integer from 0 to 100.

R⁵ is preferably a halogen-substituted and unsubstituted monovalent hydrocarbon group of 1 to 10 carbons, and more preferably 1 to 8 carbons. Specific examples include alkyl groups such as methyl, ethyl, propyl, butyl, hexyl, cyclohexyl and octyl; aryl groups such as phenyl and tolyl; aralkyl groups such as benzyl and phenylethyl; and substituted forms of the foregoing monovalent hydrocarbon groups in which some or all hydrogen atoms are substituted by fluorine or other halogen atoms. Of these, methyl is especially preferred.

It is preferred that w be from 0 to 20, x be from 1 to 20, y be from 1 to 20, z be from 1 to 20, and w+x+y+z be from 3 to 50.

The letter "A" in the above formulas represents an epoxy group and/or trialkoxysilyl group which is bonded to a silicon atom through an intervening carbon atom(s) or through intervening carbon and oxygen atoms. Specific examples include the following groups. 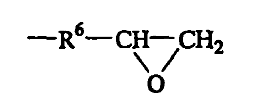 Herein, R⁶ is a divalent hydrocarbon group with 1 to 10 carbon atoms, and preferably 1 to 5 carbon atoms, such as an alkylene or cycloalkylene group, which may be separated by an oxygen atom.

-R⁷-Si(OR⁸)3

Herein, R⁷ is a divalent hydrocarbon group of 1 to 10 carbon atoms, preferably 1 to 4 carbon atoms, such as an alkylene group; and R⁸ is a monovalent hydrocarbon group of 1 to 8 carbon atoms, and preferably 1 to 4 carbon atoms, such as an alkyl group. 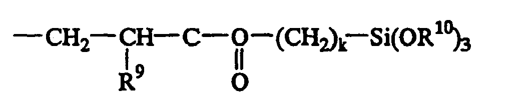 Herein, R⁹ is a monovalent hydrocarbon group of 1 to 8 carbon atoms, and preferably 1 to 4 carbon atoms, such as an alkyl group; R¹⁰ is a hydrogen atom or a methyl group, and k is an integer from 2 to 10.

The letter "B" in the above formulas represents a monovalent perfluoroalkyl group or perfluorooxyalkyl group which is bonded to a silicon atom through a carbon atom(s) or through carbon and oxygen atoms. Examples of the monovalent perfluoroalkyl group or perfluorooxyalkyl group include those of the general formulas:

C₈F₂₈₊₁-

(wherein s is an integer of 1 to 20, and preferably 2 to 10) and

F-[CF(CF₃)CF₂O]_{n'}-CₜF₂ₜ-

(wherein n' is an integer of 2 to 200, and preferably 2 to 100, and t is an integer of 1 to 3).

These organosiloxanes can be prepared by a standard technique, typically by effecting a partial addition reaction on an organohydrogenpolysiloxane bearing at least three silicon-bonded hydrogen atoms (Si-H groups) per molecule with a compound bearing an aliphatic unsaturated group (e.g., vinyl or allyl) and an epoxy group and/or trialkoxysilyl group and optionally, a compound having an aliphatic unsaturated group and a perfluoroalkyl or perfluorooxyalkyl group. The number of aliphatic unsaturated groups must be smaller than the number of Si-H groups.

In preparing the desired organosiloxane, the target substance may be isolated following reaction completion. It is also possible to use the reaction mixture from which only unreacted reactants and the addition reaction catalyst have been removed.

Specific examples of organosiloxanes which may be used as component (E) include those having the following structural formulas. These compounds may be used singly or as combinations of two or more thereof. 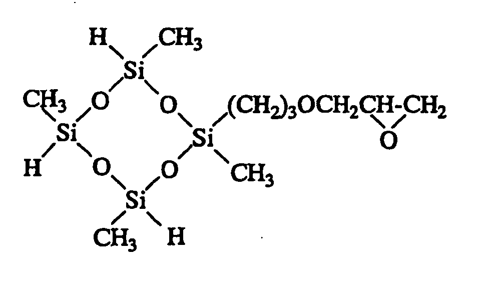 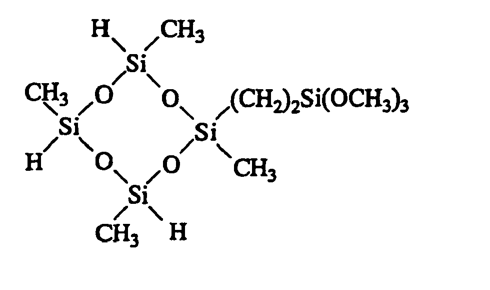 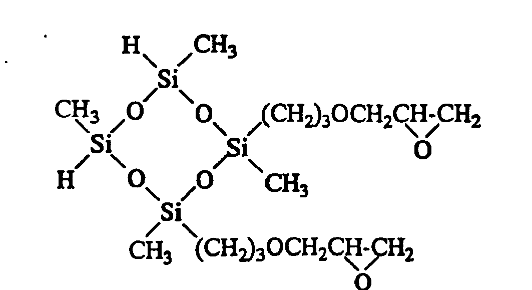 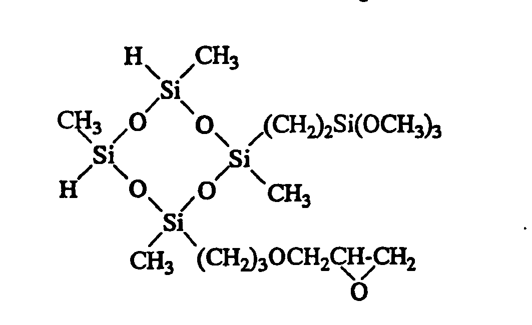 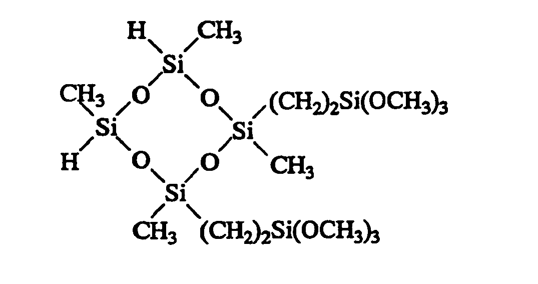 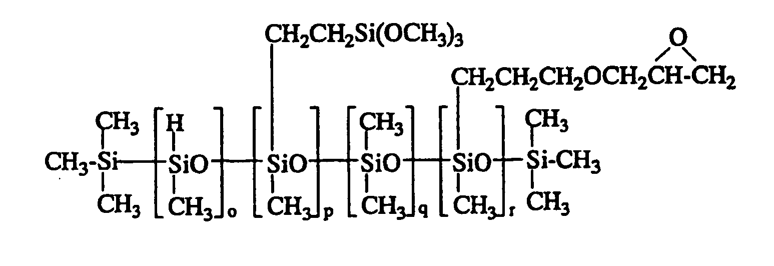 (the letters o, q and r represent positive integers, and p is 0 or a positive integer) 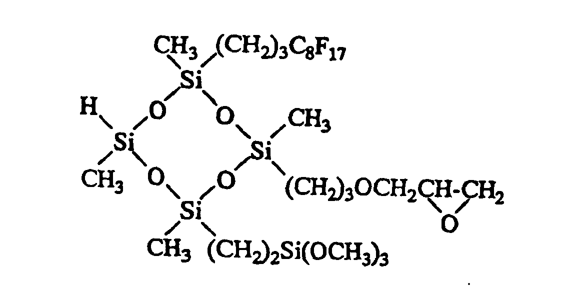 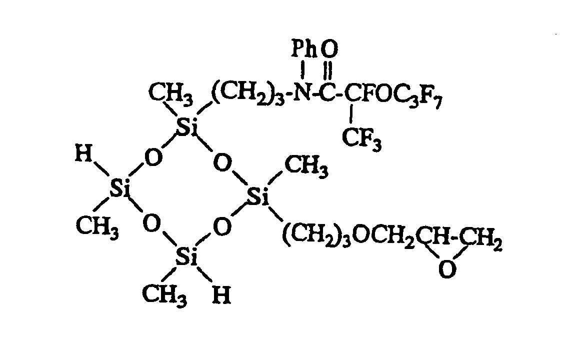 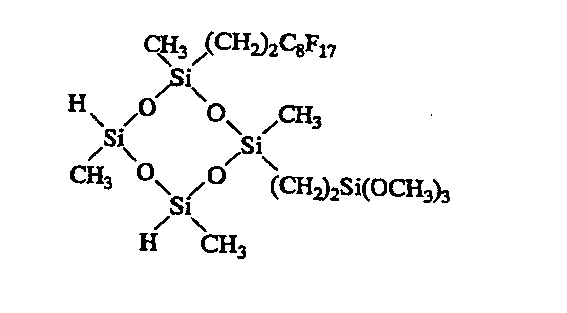 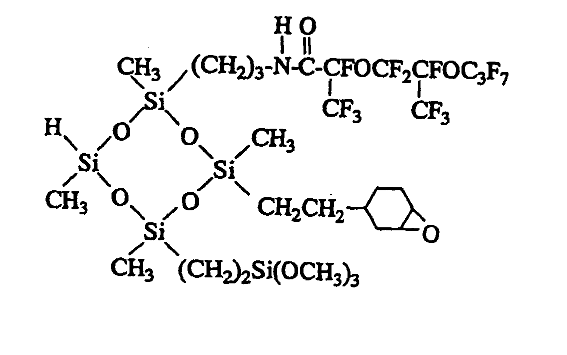 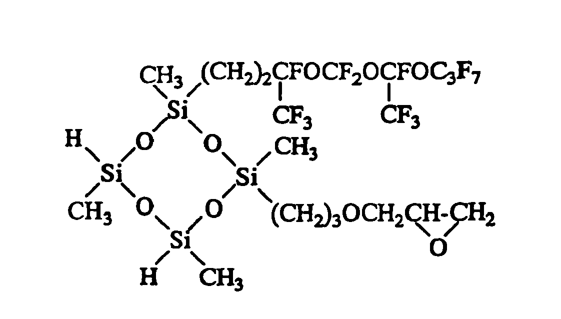 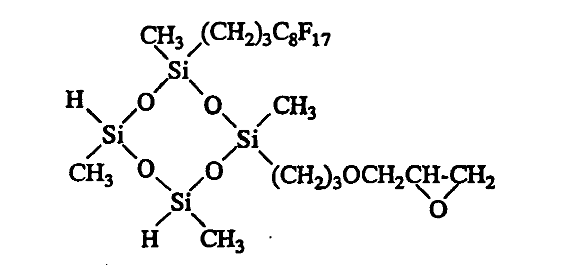 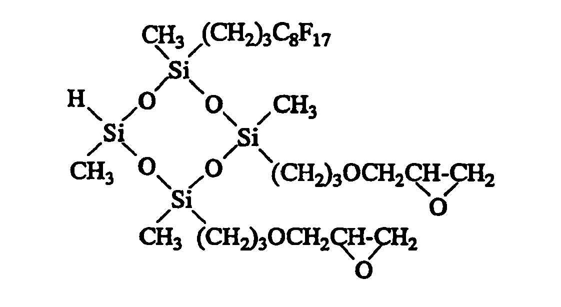 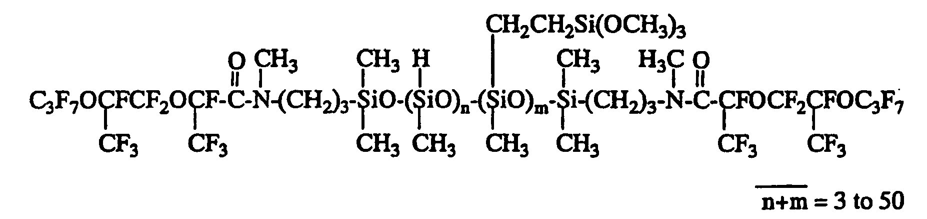 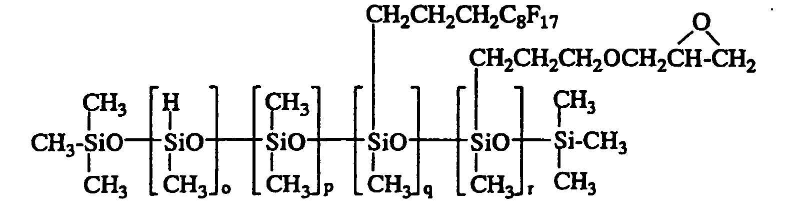 (the letters o, q and r represent positive integers, and p is 0 or a positive integer)

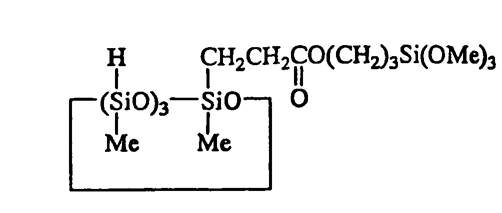

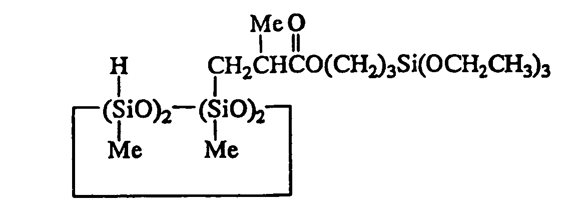

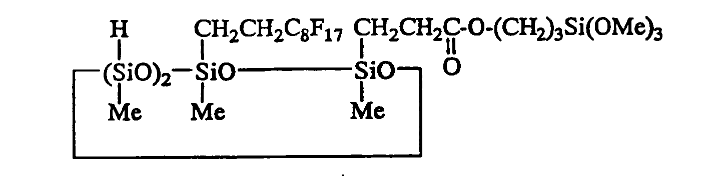

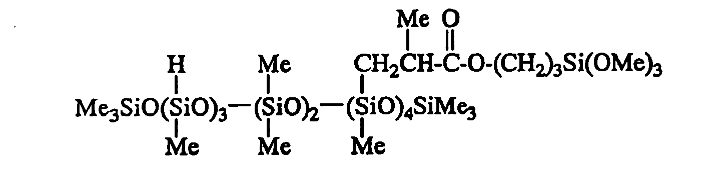

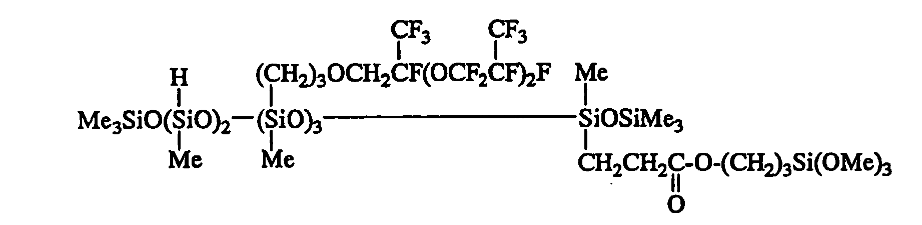

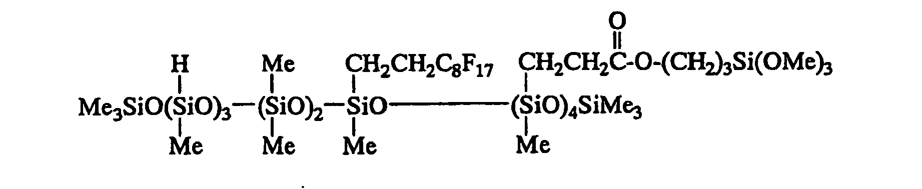

Component (E) is preferably included in an amount of 0.05 to 5.0 parts by weight, and more preferably 0.1 to 3.0 parts by weight, per 100 parts by weight of component (A). Less than 0.05 pbw of component (E) may not achieve sufficient adhesion. More than 5.0 pbw of component (E) may adversely affect the flow and interfere with the cure of the composition, and the resulting cured product may have a diminished physical strength.

### Component F

Component (F) is a carboxylic acid anhydride. It helps improve the tackifying ability of component (E) and facilitate the composition in developing adhesiveness. Such component (F) encompasses all those compounds used as the curing agent for epoxy resins, which may be either solid or liquid at room temperature and which may optionally contain a trialkoxysilyl group.

Illustrative examples of component (F) include compounds of the following structural formulae. These compounds may be used singly or as combinations of two or more thereof.

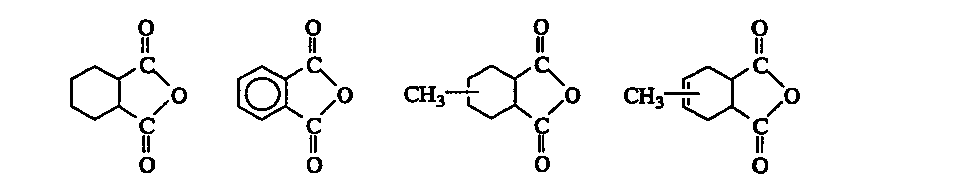

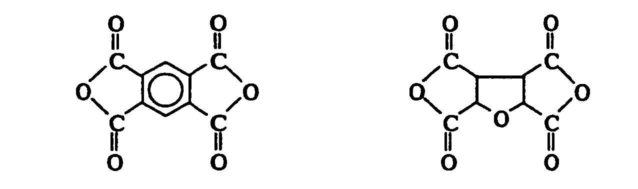

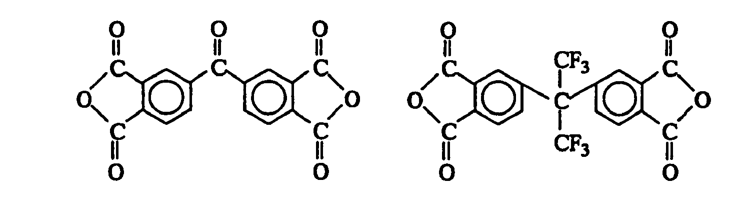

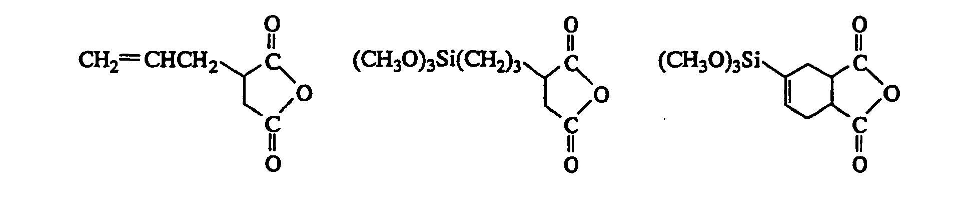

Component (F) is preferably included in an amount of 0.1 to 2.0 parts by weight, and more preferably 0.1 to 1.0 part by weight, per 100 parts by weight of component (A). Less than 0.1 pbw of component (F) may not achieve adhesion promoting effect. More than 2.0 pbw of component (F) may adversely affect the shelf stability of the composition, and the resulting cured product has a physical strength that may diminish and change with time.

### Other components

In addition to above components (A) to (F), optional ingredients that may also be included in the liquid fluoroelastomer composition to increase its utility include plasticizers, viscosity modifiers, flexibilizers, hydrosilylation catalyst regulators, inorganic fillers, adhesion promoters, and silane coupling agents. These additives may be included in any respective amounts that allow the objects of the invention to be attained and that do not compromise the properties of the composition or the cured product obtained therefrom.

Polyfluoromonoalkenyl compounds of the general formula (9) below and/or linear polyfluoro compounds of the general formulas (10) and (11) below may be used as the plasticizer, viscosity modifier and/or flexibilizer.

Rf²-(X')ₐ-CH=CH₂ (9)

In formula (9), X' and "a" are as defined above, and Rf² has the general formula (iii):

F-[CF(CF₃)CF₂O]_{w}-CₜF₂ₜ- (iii)

wherein t is an integer of 1 to 3, and w is an integer which is at least 1, but smaller than the sum of p+q (average) plus r and smaller than the sum u+v for the Rf1 group in above component (A).

D-O-(CF₂CF₂CF₂O)_{c}-D (10)

In formula (10), D is a group of the formula: C₈F₂ₛ₊₁-, wherein s is 1 to 3, and c is an integer which is from 1 to 200, but smaller than the sum of p+q (average) plus r and smaller than the sum u+v for the Rf1 group in above component (A).

D-O-(CF₂O)_{d}(CF₂CF₂O)ₑ-D (11)

In formula (11), D is as defined above, and d and e are each integers of 1 to 200 such that the sum d+e is no larger than the sum of p+q (average) plus r or the sum u+v for the Rf1 group in above component (A).

Examples of polyfluoromonoalkenyl compounds of formula (9) include those of the following structural formulas wherein m satisfies the condition indicated above for formula (9). 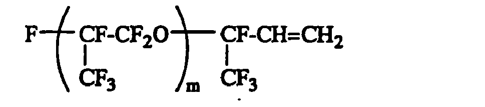 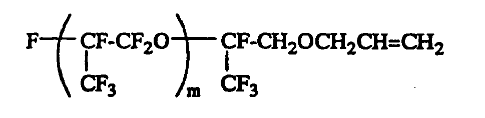 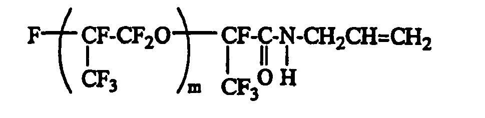 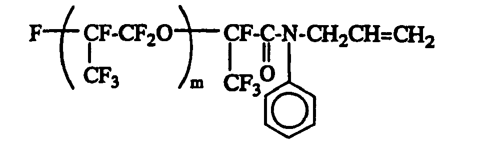 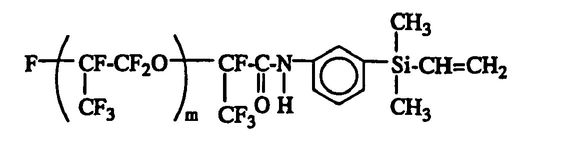 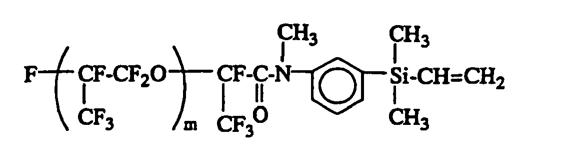 Note that m is an integer of 1 to 200.

Examples of linear polyfluoro compounds of formulas (10) and (11) include those of the following structural formulas wherein n or the sum n+m satisfies the condition indicated above for these formulas.

CF₃O-(CF₂CF₂CF₂O)ₙ-CF₂CF₃

CF₃-(OCF₂CF₂)ₙ(OCF₂)ₘ]-O-CF₃

Note that specifically m and n are each an integer from 1 to 200, and the sum m+n is from 2 to 200.

In the fluoroelastomer composition, the polyfluoro compounds of formulas (9) to (11) may be included in an amount of 1 to 100 parts, and preferably 5 to 50 parts by weight, per 100 parts by weight of component (A), linear polyfluoro compound. Desirably, the polyfluoro compounds of formulas (9) to (11) have a viscosity at 23°C within a range of 5 to 50,000 mPa-s.

Illustrative examples of suitable hydrosilylation catalyst regulators include acetylenic alcohols such as 1-ethynyl-1-hydroxycyclohexane, 3-methyl-1-butyn-3-ol, 3,5-dimethyl-1-hexyn-3-ol, 3-methyl-1-penten-3-ol and phenylbutynol; the reaction products of chlorosilanes having monovalent fluorinated substituents with acetylenic alcohols; 3-methyl-3-penten-1-yne, 3,5-dimethyl-3-hexen-1-yne and triallyl isocyanurate; polyvinylsiloxane, and organophosphorus compounds. The addition of these compounds helps to achieve an appropriate curing reactivity and shelf stability.

Illustrative examples of inorganic fillers include reinforcing or semi-reinforcing fillers such as quartz powder, fused quartz powder, diatomaceous earth and calcium carbonate; inorganic pigments such as titanium oxide, iron oxide, carbon black and cobalt aluminate; heat stabilizers such as titanium oxide, iron oxide, carbon black, cerium oxide, cerium hydroxide, zinc carbonate, magnesium carbonate and manganese carbonate; heat conductive agents such as alumina, boron nitride, silicon carbide and metal powders; and electrical conductive agents such as carbon black, silver powder and conductive zinc oxide.

Adhesion promoters such as alkyl titanates, and silane coupling agents such as epoxy-containing silanes may also be added to the fluoroelastomer composition.

The liquid fluoroelastomer composition according to the invention can be prepared by uniformly mixing above components (A) to (F) and other optional ingredients on a suitable mixing apparatus, such as a planetary mixer, Ross mixer or Hobart mixer. If necessary, an apparatus such as a kneader or a three-roll mill may also be used for intimately working the mixture.

### Bonding of fluoroelastomer to polyamide resin

The bonding method of the invention involves applying the primer composition to a surface of polyamide resin, heat treating to form a primer coat, applying the liquid fluoroelastomer composition to the primer coat, and heat curing.

Specifically, the primer composition is applied to a surface of polyamide resin to form a coating. The application technique is not particularly limited and includes brush coating, spray coating, dipping and the like.

The coating of the primer composition is heat dried at a temperature of 100°C to 200°C, and preferably 105°C to 180°C until a primer coat is formed. Drying below 100°C has a likelihood that bubbles be left at the interface with the overlying liquid fluoroelastomer composition. The drying time varies with the thicknesses of the coating and the polyamide resin although it is typically 10 to 90 minutes. After the heat treatment, the coating is allowed to cool down to a temperature in the range from room temperature to 100°C.

Next, within a certain time from the heat treatment which varies with the ambient humidity, but is typically one hour, the liquid fluoroelastomer composition is applied onto the primer coat. A time lag of more than one hour has a possibility that bubbles be left at the interface between the primer coat and the cured layer of liquid fluoroelastomer composition.

Once the liquid fluoroelastomer composition is applied, it is heated at a temperature of 100°C to 200°C, and preferably 120°C to 180°C, for several minutes to several hours whereby the liquid fluoroelastomer composition is converted (or cured and crosslinked) into a fluoroelastomer. As a result, the fluoroelastomer is tenaciously bonded to the polyamide resin via the primer coat. Additionally, durable adhesion over a long term is insured.

The bonding method of the invention is advantageous when applied to automotive, electric/electronic and other parts and components which use containment cases or substrates made of polyamide resins, especially when the liquid fluoroelastomer composition featuring oil resistance and chemical resistance is used as sealing or coating agents. The bonding method of the invention is advantageous particularly when the liquid fluoroelastomer composition is used for the protective sealing or coating of electric/electronic circuits in pressure, temperature and other sensors which are used in automotive control systems and exposed to various gases, hot water, chemicals and the like, for example.

### EXAMPLE

Examples of the invention are given below by way of illustration and not by way of limitation. All parts are by weight. Values of viscosity, bond strength and the like are measurements at 23°C.

### Preparation of primer solution

Primers 1 and 2 were prepared according to the formulation (weight ratio) in Table 1.

**Table 1**

| Components | Primer 1 | Primer 2 |
|---|---|---|
| n-C₇H₁₆ | 85 | 82 |
| (C₂H₅0)₄Si | 8 | 8 |
| (CH₃O)₃SiCH(CH₃)COOC₂H₅ | 2 | 3 |
| 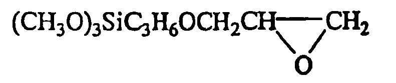 | - | 2 |
| (n-C₄H₉O)₄Ti | 5 | 5 |

Note that n-C₇H₁₆ is heptane and (n-C₄H₉O)₄Ti is tetra(n-butyl) titanate.

### Preparation of liquid fluoroelastomer composition

A planetary mixer was charged with 100 parts of a polymer of the following formula (13) (viscosity 10,000 mPa-s). 10 parts of fumed silica surface treated with dimethyldichlorosilane (BET specific surface area 110 m²/g) was added to the polymer, which were kneaded for 1 hour without heating. With kneading continued, the mixer was heated until the internal temperature reached 150°C. While the mixer was held at 150-170°C, heat treatment was effected for 2 hours under a reduced pressure of 60 Torr. Next, the contents were cooled below 40°C, after which 0.2 part of carboxylic anhydride of the following formula (12) was added thereto. Kneading was continued until uniform dispersion. Subsequent two passes through a three-roll mill yielded a base compound.

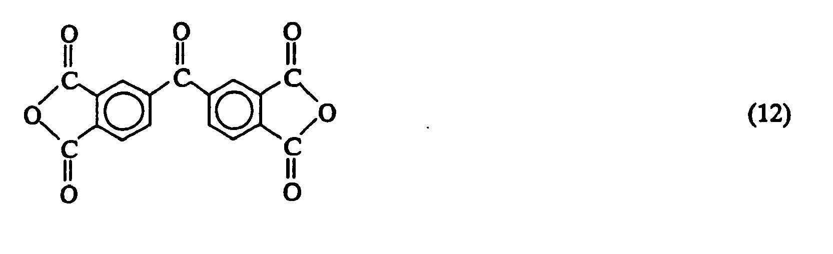

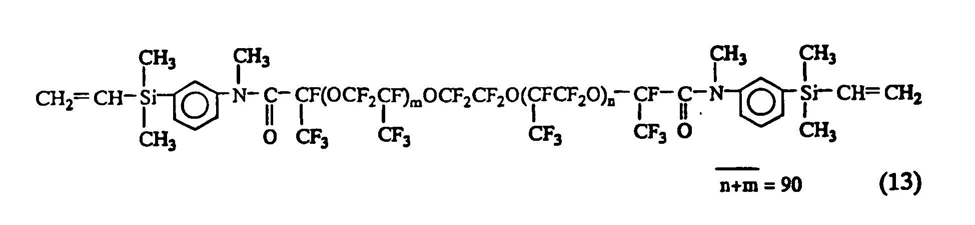

### Composition 1

To 110.2 parts of the base compound, 0.15 part of a toluene solution of platinum-divinyltetramethyldisiloxane complex (Pt concentration 0.5 wt%), 0.30 part of a 50% toluene solution of ethynyl cyclohexanol, 1.4 parts of a fluorinated organohydrogensiloxane of the following formula (14), 1.1 parts of a fluorinated organohydrogensiloxane of the following formula (15), and 2.5 parts of a tackifier of the following formula (16) were successively added. They were mixed until uniform. Subsequent deaeration yielded composition 1.

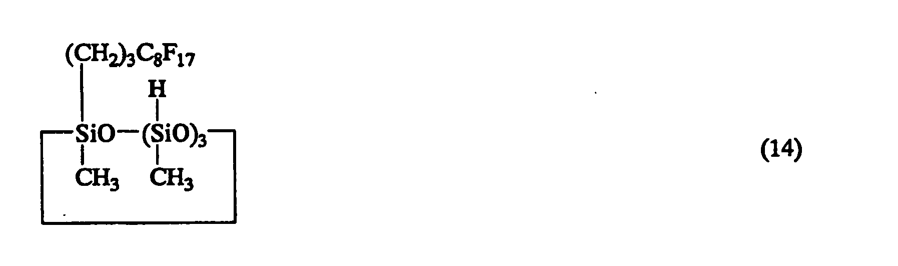

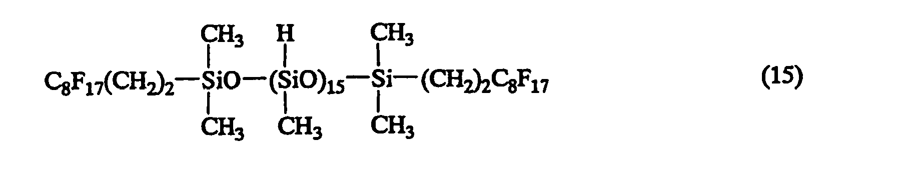

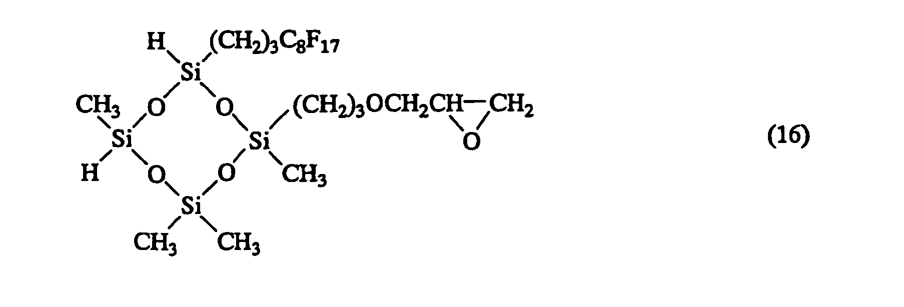

### Composition 2

Composition 2 was prepared as was composition 1 except that 2.0 parts of the tackifier of formula (16) and 0.1 part of another tackifier of the following formula (17) were used instead of 2.5 parts of the tackifier of formula (16).

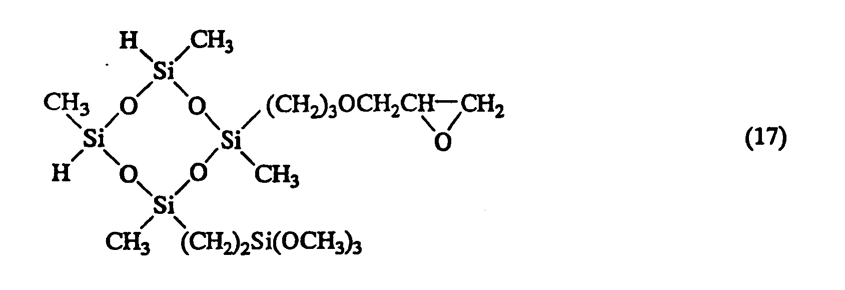

The compositions thus prepared were filled in cartridges, respectively, and used in Examples and Comparative Examples.

### Example 1

In a temperature/humidity controlled chamber (25°C, 50% RH), two pieces of 30% glass fiber-filled nylon 66 resin (100 mm x 25 mm x 1 mm thick) were furnished and primer 1 was sprayed on one surface of each piece in an area from one end to 20 mm in a longitudinal direction. The sprayed pieces were allowed to stand for 30 minutes and then heat treated at 120°C for 1 hour. Thereafter, the pieces were allowed to cool in the chamber. Within 1 hour from the heat treatment, the pieces were joined together with composition 1 such that a 1-mm thick layer of composition 1 was sandwiched between the primed end portions of the pieces that extended 10 mm from the end. The assembly was heated at 150°C for 1 hour to cure the composition, obtaining a bond test specimen. The specimen was examined for bond strength and failure mode by a tensile shear bond test at a pulling speed of 50 mm/min, and the presence of bubbles at the bond interface was inspected. The results are shown in Table 2.

Separately, a test specimen was similarly prepared and subjected to a transmission oil immersion test (test oil DEXRON III, 150°C, 1,100 hours). Thereafter, the specimen was examined for bond strength and failure mode by the same bond test as above. The results are also shown in Table 2. It is noted that the specimen was subjected to the bond test one day later after removal from the oil immersion test.

### Example 2

Bond test specimens were prepared as in Example 1 except that primer 2 was used instead of primer 1 in Example 1. The bond test and oil immersion test were conducted as in Example 1. The results are also shown in Table 2.

### Example 3

Bond test specimens were prepared as in Example 1 except that composition 2 was used instead of composition 1 in Example 1. The bond test and oil immersion test were conducted as in Example 1. The results are also shown in Table 2.

### Example 4

Bond test specimens were prepared as in Example 1 except that composition 2 was used instead of composition 1 in Example 1, and primer 2 was used instead of primer 1 in Example 1. The bond test and oil immersion test were conducted as in Example 1. The results are also shown in Table 2.

### Example 5

Bond test specimens were prepared as in Example 1 except that the heating conditions after primer coating were changed from 120°C and 1 hour in Example 1 to 150°C and 30 minutes. The bond test and oil immersion test were conducted as in Example 1. The results are also shown in Table 2.

### Example 6

Bond test specimens were prepared as in Example 2 except that the heating conditions after primer coating were changed from 120°C and 1 hour in Example 2 to 150°C and 30 minutes. The bond test and oil immersion test were conducted as in Example 1. The results are also shown in Table 2.

### Comparative Example 1

Bond test specimens were prepared as in Example 1 except that primer coating and subsequent heat treatment were omitted. The bond test was conducted as in Example 1. Many bubbles were found at the bond interface and thus, the oil immersion test was not conducted. Only the results of the bond test are shown in Table 3.

### Comparative Example 2

Bond test specimens were prepared as in Example 1 except that the pieces were not coated with primer, but heat treated at 120°C for 1 hour. The bond test and oil immersion test were conducted as in Example 1. The results are shown in Table 3.

### Comparative Example 3

Bond test specimens were prepared as in Example 1 except that the pieces were not coated with primer, but heat treated at 150°C for 30 minutes. The bond test and oil immersion test were conducted as in Example 1. The results are also shown in Table 3.

### Comparative Example 4

Bond test specimens were prepared as in Example 1 except that the heating conditions after primer coating were changed from 120°C and 1 hour in Example 1 to 60°C and 2 hours. The bond test and oil immersion test were conducted as in Example 1. The results are also shown in Table 3.

### Comparative Example 5

Bond test specimens were prepared as in Example 1 except that the heating conditions after primer coating were changed from 120°C and 1 hour in Example 1 to 80°C and 1 hour. The bond test and oil immersion test were conducted as in Example 1. The results are also shown in Table 3.

### Comparative Example 6

Bond test specimens were prepared as in Example 5 except that the holding time after the primer coat heat treatment was changed from within 1 hour to 2 hours. The bond test and oil immersion test were conducted as in Example 1. The results are also shown in Table 3.

**Table 2**

| | Example | | | | | |
|---|---|---|---|---|---|---|
| | 1 | 2 | 3 | 4 | 5 | 6 |
| Primer | 1 | 1 | 2 | 2 | 1 | 1 |
| Composition | 1 | 2 | 1 | 2 | 1 | 2 |
| Heating conditions | 120° C 1 hour 1 | 120° C hour | 120° C 1 hour 1 | 120° C 1 hour | 150° C 30 min | 150° C 30 min |
| Initial bond strength (MPa) | 1.5 | 1.7 | 2.0 | 2.3 | 1.5 | 1.8 |
| Failure mode | CF | CF | CF | CF | CF | CF |
| Interface bubbles | Nil | Nil | Nil | Nil | Nil | Nil |
| Bond strength after oil immersion (MPa) | 1.2 | 1.5 | 1.6 | 2.1 | 1.2 | 1.6 |
| Failure mode after oil immersion | CF | CF | CF | CF | CF | CF |

| | | | | | | |
|---|---|---|---|---|---|---|
| CF: cohesive failure | | | | | | |

**Table 3**

| | Comparative Example | | | | | |
|---|---|---|---|---|---|---|
| | 1 | 2 | 3 | 4 | 5 | 6 |
| Primer | None | None | None | 1 | 1 | 1 |
| Composition | 1 | 1 | 1 | 1 | 1 | 1 |
| Heating conditions | None | 120° C 1 hour | 150° C 30 min | 60° C 1 hour | 80° C 1 hour | 150° C 30 min |
| Initial bond strength (MPa) | 0.2 | 1.1 | 1.2 | 0.8 | 1.0 | 1.3 |
| Failure mode | Not judgeable | CF | CF | CF+AF | CF+AF | CF+AF |
| Interface bubbles | Large size | Nil | Nil | Small size | Small size | Small size |
| Bond strength after oil immersion (MPa) | - | 0.1 | 0.1 | 0.3 | 0.5 | 0.6 |
| Failure mode after oil immersion | - | AF | AF | AF | AF | AF |

| | | | | | | |
|---|---|---|---|---|---|---|
| CF: cohesive failure, AF: adhesive failure (or interfacial peel) | | | | | | |

## Claims

1. A method for providing a bond between a polyamide resin and a fluoroelastomer, comprising the steps of:
applying a silane-based primer composition to a surface of a polyamide resin,
heat treating the primer composition at 100°C to 200°C to form a primer coat,
applying a liquid fluoroelastomer composition to the primer coat at room temperature to 100°C, and
heat curing the fluoroelastomer composition at 100°C to 200°C for bonding the fluoroelastomer to the polyamide resin.

2. The method of claim 1 wherein said silane-based primer composition comprises
(I) an aliphatic saturated hydrocarbon,
(II) a tetraalkoxysilane of the general formula (1):
Si(OR¹)₄ (1)
wherein R¹ is each independently a monovalent hydrocarbon group,
(III) a trialkoxysilane of the general formula (2):
(R²O)₃-Si-CHR³-COOR⁴ (2)
wherein R² is each independently a monovalent hydrocarbon group, R³ is hydrogen or methyl, and R⁴ is a monovalent hydrocarbon group, and
(IV) an alkyl titanate.

3. The method of claim 1 or 2 wherein said liquid fluoroelastomer composition comprises
(A) a linear polyfluoro compound having the general formula (3):
CH₂=CH-(X)ₐ-Rf¹-(X')ₐ-CH=CH₂ (3)
wherein X is -CH₂-, -CH₂O-, -CH₂OCH₂- or -Y-NR-CO- wherein Y is -CH₂- or an o, m or p-dimethylsilylphenylene group of the structural formula (Z): 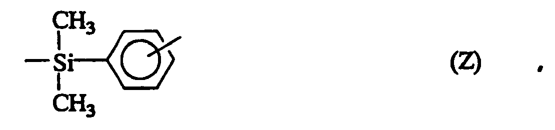 R is hydrogen or a substituted or unsubstituted monovalent hydrocarbon group, X' is -CH₂-, -OCH₂-, -CH₂OCH₂- or -CO-NR-Y'- wherein Y' is -CH₂- or an o, m or p-dimethylsilylphenylene group of the structural formula (Z'): 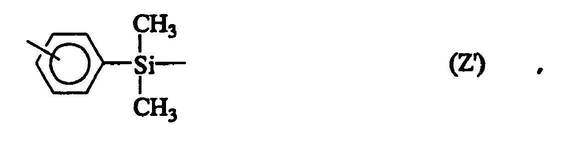 R is as defined above, "a" is independently 0 or 1,
Rf¹ is a divalent perfluoropolyether group having the general formula (i) :
-CₜF₂ₜ-[OCF₂CF(CF₃)]ₚ-O-CF₂(CF₂)ᵣCF₂-O-[CF(CF₃)CF₂O]_{q}-CₜF₂ₜ- (i)
wherein p and q are integers of 1 to 150, the sum of p and q is 2 to 200 on average, r is an integer of 0 to 6, and t is 1, 2 or 3, or a divalent perfluoropolyether group of the general formula (ii):
-CₜF₂ₜ-[OCF₂CF(CF₃)]ᵤ-(OCF₂)ᵥ-OCₜF₂ₜ- (ii)
wherein u is an integer of 1 to 200, v is an integer of 1 to 50, and t is as defined above,
(B) a fluorinated organohydrogensiloxane containing per molecule at least one monovalent perfluoroalkyl, monovalent perfluorooxyalkyl, divalent perfluoroalkylene or divalent perfluorooxyalkylene group and at least two silicon-bonded hydrogen atoms,
(C) a platinum group metal catalyst,
(D) hydrophobic silica powder,
(E) an organosiloxane containing per molecule at least one hydrogen atom bonded to a silicon atom directly and at least one group selected from among epoxy and trialkoxysilyl groups, which is bonded to a silicon atom via a carbon atom or carbon and oxygen atoms, and
(F) a carboxylic anhydride.

4. The method of any one of claims 1 to 3 wherein said organosiloxane (E) further contains per molecule at least one monovalent perfluoroalkyl or monovalent perfluorooxyalkyl group bonded to a silicon atom via a carbon atom or carbon and oxygen atoms.

## Patentansprüche

1. Verfahren zum Vorsehen einer Bindung zwischen einem Polyamidharz und einem Fluorelastomer, umfassend die Schritte:
Aufbringen einer Primerzusammensetzung auf Silanbasis auf eine Oberfläche eines Polyamidharzes,
Wärmebehandeln der Primerzusammensetzung bei 100°C bis 200°C um eine Primerschicht zu bilden,
Aufbringen einer flüssigen Fluorelastomerzusammensetzung auf die Primerschicht bei Raumtemperatur bis 100°C, und
Wärmehärten der Fluorelastomerzusammensetzung bei 100°C bis 200°C, um das Fluorelastomer an das Polyamidharz zu binden.

2. Verfahren nach Anspruch 1, wobei die Primerzusammensetzung auf Silanbasis umfasst
(I) einen aliphatischen gesättigten Kohlenwasserstoff,
(II) ein Tetraalkoxysilan der allgemeinen Formel (1):
Si(OR¹)₄ (1)
worin Ru jeweils unabhängig eine einwertige Kohlenwasserstoffgruppe ist,
(III) ein Trialkoxysilan der allgemeinen Formel (2):
(R²O)₃-Si-CHR³-COOR⁴ (2)
worin R² jeweils unabhängig eine einwertige Kohlenwasserstoffgruppe ist, R³ Wasserstoff oder Methyl ist, und R⁴ eine einwertige Kohlenwasserstoffgruppe ist,
und
(IV) ein Alkyltitanat.

3. Verfahren nach Anspruch 1 oder 2, wobei die flüssige Fluorelastomerzusammensetzung umfasst
(A) eine lineare Polyfluorverbindung der allgemeinen Formel (3):
CH₂=CH-(X)ₐ-Rf¹-(X')ₐ-CH=CH₂ (3)
worin X -CH₂-, -CH₂O-, -CH₂OCH₂- oder -Y-NR-CO- ist, worin Y -CH₂- oder eine o-, m- oder p-Dimethylsilylphenylengruppe der Strukturformel (Z) ist: 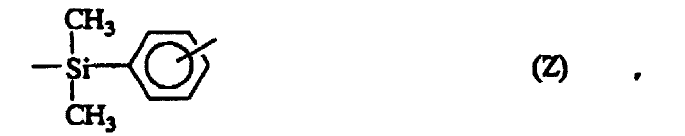 R Wasserstoff oder eine substituierte oder unsubstituierte, einwertige Kohlenwasserstoffgruppe ist, X' -CH₂-, -OCH₂-, -CH₂OCH₂- oder -CO-NR-Y'- ist, worin Y' -CH₂- oder eine o-, m- oder p-Dimethylsilylphenylengruppe der Strukturformel (Z') ist: 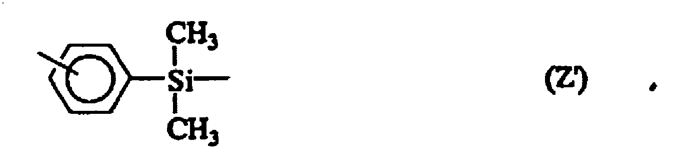 R wie oben definiert ist, "a" unabhängig 0 oder 1 ist,
Rf¹eine zweiwertige Perfluorpolyethergruppe der allgemeinen Formel (i) ist:
-CₜF₂ₜ-[OCF₂CF(CF₃)]ₚ-O-CF₂(CF₂)ᵣCF₂-O-[CF(CF₃)CF₂O]_{q}-CₜF₂ₜ- (i)
worin p und q ganze Zahlen von 1 bis 150 sind, die Summe aus p und q im Durchschnitt 2 bis 200 ist, r eine ganze Zahl von 0 bis 6 ist, und t 1, 2 oder 3 ist, oder eine zweiwertige Perfluorpolyethergruppe der allgemeinen Formel (ii):
-CₜF₂ₜ-[OCF₂CF(CF₃)]ᵤ-(OCF₂)ᵥ-OCₜF₂ₜ- (ii)
worin u eine ganze Zahl von 1 bis 200 ist, v eine ganze Zahl von 1 bis 50 ist, und t wie oben definiert ist,
(B) ein fluoriertes Organowasserstoffsiloxan, enthaltend pro Molekül mindestens eine einwertige Perfluoralkyl-, einwertige Perfluoroxyalkyl-, zweiwertige Perfluoralkylen- oder zweiwertige Perfluoroxyalkylengruppe und mindestens zwei an Silicium gebundene Wasserstoffatome,
(C) einen Platingruppenmetallkatalysator,
(D) hydrophobes Silicapulver,
(E) ein Organosiloxan, enthaltend pro Molekül mindestens ein Wasserstoffatom, das direkt an ein Siliciumatom gebunden ist, und mindestens eine Gruppe, gewählt aus Epoxy- und Trialkoxysilylgruppen, welche über ein Kohlenstoffatom oder Kohlenstoff- und Sauerstoffatome an ein Siliciumatom gebunden ist, und
(F) ein Carbonsäureanhydrid.

4. Verfahren nach mindestens einem der Ansprüche 1 bis 3, wobei das Organosiloxan (E) weiterhin pro Molekül mindestens eine einwertige Perfluoralkyl- oder einwertige Perfluoroxyalkylgruppe, die über ein Kohlenstoffatom oder Kohlenstoff- und Sauerstoffatome an ein Siliciumatom gebunden ist, enthält.

## Revendications

1. Procédé permettant de faire adhérer l'un à l'autre un fluoroélastomère et une résine de polyamide, lequel procédé comporte les étapes suivantes :
- appliquer une composition de primaire à base de silane sur une surface de résine de polyamide,
- chauffer cette composition de primaire à une température située dans l'intervalle allant de 100 à 200 °C, pour en faire un revêtement primaire,
- appliquer une composition de fluoroélastomère liquide sur ce revêtement primaire, à une température située dans l'intervalle allant de la température ambiante à 100 °C,
- et faire durcir cette composition de fluoroélastomère en la chauffant à une température située dans l'intervalle allant de 100 à 200 °C, pour faire adhérer le fluoroélastomère à la résine de polyamide.

2. Procédé conforme à la revendication 1, dans lequel ladite composition de primaire à base de silane comprend :
I) un hydrocarbure aliphatique saturé,
II) un tétraalcoxy-silane de formule générale (1) :
Si(OR')₄ (1)
dans laquelle chaque symbole R¹ représente indépendamment un groupe hydrocarbyle monovalent,
III) un trialcoxy-silane de formule générale (2) :
(R²O)₃Si-CHR³-COOR⁴ (2)
dans laquelle chaque symbole R² représente indépendamment un groupe hydrocarbyle monovalent, R³ représente un atome d'hydrogène ou un groupe méthyle, et R⁴ représente un groupe hydrocarbyle monovalent,
IV) et un titanate d'alkyle.

3. Procédé conforme à la revendication 1 ou 2, dans lequel ladite composition de fluoroélastomère liquide comprend :
A) un composé polyfluoré et linéaire, de formule générale (3) :
CH₂=CH-(X)ₐ-Rf¹-(X')ₐ-CH=CH₂ (3)
dans laquelle
- X représente un chaînon ou fragment symbolisé par -CH₂-, -CH₂O-, -CH₂OCH₂- ou -Y-NR-CO- où Y représente un chaînon -CH₂- ou un groupe ortho-, méta- ou para-(diméthylsilyl)-phénylène de formule structurale (Z) : 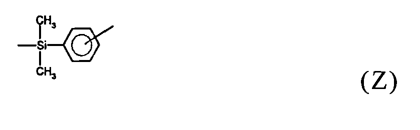 et R représente un atome d'hydrogène ou un groupe hydrocarbyle monovalent, avec ou sans substituant,
- X' représente un chaînon ou fragment symbolisé par -CH₂-, -OCH₂-, -CH²OCH²- ou -CO-NR-Y'- où Y' représente un chaînon -CH₂- ou un groupe ortho-, méta- ou para-(diméthylsilyl)-phénylène de formule structurale (Z') : 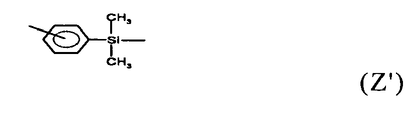 et R a la signification indiquée ci-dessus,
- chaque indice a vaut indépendamment 0 ou 1,
- et Rf¹ représente un groupe divalent de type perfluoro-polyéther de formule générale (i) :
-CₜF₂ₜ-[OCF₂CF(CF₃)]ₚ-O-CF₂(CF₂)ᵣCF₂-O-[CF(CF₃)CF₂O]_{q}-CₜF₂ₜ- (i)
dans laquelle les indices p et q sont des nombres entiers valant de 1 à 150 et la somme des indices p et q vaut en moyenne de 2 à 200, l'indice r est un nombre entier valant de 0 à 6, et l'indice t vaut 1, 2 ou 3,
ou un groupe divalent de type perfluoro-polyéther de formule générale (ii) :
-CₜF₂ₜ-[OCF₂CF(CF₃)]ᵤ-(OCF₂)ᵥ-OCₜF₂ₜ- (ii)
dans laquelle l'indice u est un nombre entier valant de 1 à 200, l'indice v est un nombre entier valant de 1 à 50 et l'indice t peut prendre les valeurs indiquées ci-dessus ;
B) un organo-hydrogéno-siloxane fluoré qui comporte par molécule au moins un groupe monovalent de type perfluoro-alkyle ou perfluoro-oxy-alkyle ou un groupe divalent de type perfluoro-alkylène ou perfluoro-oxy-alkylène, ainsi qu'au moins deux atomes d'hydrogène liés à des atomes de silicium ;
C) un catalyseur à base d'un métal du groupe du platine ;
D) de la silice hydrophobe en poudre ;
E) un organo-siloxane qui comporte par molécule au moins un atome d'hydrogène directement lié à un atome de silicium, ainsi qu'au moins un groupe, choisi parmi les groupes époxy et trialcoxysilyle, qui est lié à un atome de silicium par l'intermédiaire d'un atome de carbone ou d'atomes de carbone et d'oxygène ;
F) et un anhydride d'acide carboxylique.

4. Procédé conforme à l'une des revendications 1 à 3, dans lequel ledit organo-siloxane (E) comporte en outre, par molécule, au moins un groupe monovalent, de type perfluoro-alkyle ou perfluoro-oxy-alkyle, qui est lié à un atome de silicium par l'intermédiaire d'un atome de carbone ou d'atomes de carbone et d'oxygène.
